# EUROPÄISCHE PATENTSCHRIFT

(11) **EP 0 364 868 B1**
(45) Veröffentlichungstag und Bekanntmachung des Hinweises auf die Patenterteilung: **04.05.1994**
(21) Anmeldenummer: 89118852.6
(22) Anmeldetag: 11.10.1989
(51) Int. Cl.: F16K 3/04

(54) **Regel- und Absperrvorrichtung**
Control and shut-off device
Dispositif de commande et d'arrêt

(30) Priorität: 18.10.1988 DE 3835493
(43) Veröffentlichungstag der Anmeldung: 25.04.1990
(73) Patentinhaber: Preuss, Ute, 71067 Sindelfingen (DE)
(72) Erfinder: Preuss, Ute, 71067 Sindelfingen (DE)
(74) Vertreter: Raeck, Wilfrid, Dipl.-Ing.

(56) Entgegenhaltungen:
- DE-A- 3 309 546
- FR-A- 2 523 255
- GB-A- 2 090 375
- US-A- 3 659 822
- US-A- 4 554 943
- US-A- 4 587 989

## Beschreibung

Die Erfindung betrifft eine Regel- und Absperrvorrichtung für flüssige oder gasförmige Medien in Rohrleitungen, mit einer in einer zur Rohrachse im allgemeinen senkrechten Ebene beweglichen und wenigstens eine Durchtrittsöffnung aufweisenden Schwenkscheibe, die in einem an die Rohrleitung anschließbaren und eine deren Nennweite entsprechende Durchgangsöffnung enthaltenden Gehäuse untergebracht ist, wobei eine Hälfte der Schwenkscheibe innerhalb ihres kreisförmigen Außenumfanges wenigstens die eine Durchtrittsöffnung aufweist und am Innenumfang eines kreisförmigen Hohlraumes des Gehäuses sowie auf beiden Seiten zwischen radialen Gleitschichten geführt ist, wobei die Schwenkscheibe einen Antriebszapfen aufweist, und mit einer Antriebseinrichtung zur Kraftübertragung mit dem Antriebszapfen und zur Durchführung von Schwenkbewegungen um ihre Mittelachse in Verbindung steht.

Bei einer aus der GB-A-2 090 375 bekannten als Regel- und Absperrvorrichtung der vorbezeichneten Art, die als Drehschieber in Förderleitungen für pulver- oder körnerförmiges Material Anwendung findet, ist eine kreisrunde Schieberplatte mittels eines von ihrer einen Seite ausgehenden zentrischen Zapfens in einem durch einen Deckel verschließbaren Schiebergehäuse drehbar gelagert. Der Gehäuseboden enthält in Umfangsnähe auf gleichem Radius nebeneinander zwei Öffnungen, an die zwei Abflußleitungen angeflanscht sind. Die Schieberplatte enthält auf demselben Radius eine Öffnung, die auf einer Seite durch Verschwenken der Schieberplatte auf die Gehäuseöffnungen ausrichtbar ist und auf ihrer anderen Seite mittels eines flexiblen Rohrstückes mit einer feststehenden Zuflußleitung in Verbindung steht. Über einen am Drehzapfen befestigten Hebel kann die Schieberplatte mit Hilfe eines außerhalb des Gehäuses abgestützten Linearantriebes hin- und herverschwenkt werden, um die durch eine verbreiterte Öffnung im Gehäusedeckel lose hindurchragende flexible Zuflußleitung mit ihrer in der Schieberplatte mündenden Öffnung wahlweise mit einer oder beiden Abflußöffnungen im Gehäuse in Verbindung zu bringen bzw. auf diese auszurichten, wobei auch die eine oder andere Abflußöffnung vollständig abgesperrt werden kann.

Aus der US-A-4 587 989 ist ein Drehschieber nach Art der vorbezeichneten Regel - und Absperrvorrichtung zur Steuerung von Durchflußöffnungen für körniges, getrocknetes oder breiiges Fördergut mit einem hohen Prozentsatz an Festkörpern bekannt, bei dem eine kreisförmige Schieberplatte zwischen zwei mit nachgiebigen Belägen versehenen und auf Abstand zueinander gehaltenen Gehäuseplatten drehbar angeordnet ist. Beide Gehäuseplatten und die Schieberplatte enthalten fluchtende Durchflußöffnungen sowie jeweils eine zentrische Öffnung, durch die sich ein mit einem Handhebel verbundener Drehzapfen erstreckt, der mittels einer Keilfeder mit der Schieberplatte drehfest verbunden ist. Die Gehäuseplatten sind am Umfang miteinander gegen einen Abstandshalterring verschraubt, der die Gleitbeläge und den Abstand zwischen diesen nach außen abschließt, innerhalb dessen die Schieberplatte zur Verstellung der Durchflußöffnung verschwenkt wird. Der Umfang der Durchflußöffnungen der Gehäuseplatten wird durch Stahlhülsen gebildet, die an von ihnen ausgehenden Radialflanschen außen auf die Gehäuseplatten aufgeschweißt sind. Die Stahlhülsen decken einen größeren Bereich der nachgiebigen Beläge zur jeweiligen Öffnung hin ab.

Der Erfindung liegt die Aufgabe zugrunde, eine stopfbuchsloses Regel- und Absperrvorrichtung der eingangs bezeichneten Art dahingehend auszugestalten und zu verbessern, daß bei möglichst kleinen Gehäuseabmessungen ein größtmöglicher Regelquerschnitt für die Durchlaßöffnung in Schieberplatte und Gehäuse zur Verfügung steht.

Erfindungsgemäß wird diese Aufgabe dadurch gelöst, daß der Antriebszapfen zur Kraftübertragung für die Schwenkbewegung in der anderen Hälfte der Schwenkscheibe innerhalb ihres Außenumfanges vorgesehen ist, und daß die am Antriebszapfen angreifende Antriebseinrichtung am Gehäuse abgestützt ist.

Da bei der vorgeschlagenen Bauform der Antriebszapfen und die für dessen Bogenbewegung vorgesehene Öffnung im Gehäuse innerhalb der Hälfte der Schwenkscheibe und des Gehäuses vorgesehen sind, die der die Durchtrittsöffnung enthaltenden Hälfte gegenüberliegt, können aufgrund dieser örtlichen Trennung von Antrieb, Lagerung und Durchlaßöffnung die beispielsweise bei der Durchlaßregelung von suspendiertem Zellstoff bei der Papierherstellung oder bei anderen vergleichbaren Technologien auftretenden Korrosions- und Blockierungsprobleme des Drehschiebers wirksam vermieden werden. Der sich aufgrund der erfindungsgemäßen Bauweise ergebende größere abdichtende Abstand der Durchtrittsöffnung der Schwenkscheibe vom Antriebszapfen und von dessen Durchtrittsöffnung im Gehäuse verhindert das Enstehen unerwünschter Toträume, in denen nach Absperrung der Flüssigkeitsströmung deren Feststoffanteile eintrocknen und Korrosion, Verstopfungen oder Verklemmungen verursachen würden.

Eine zweckmäßige Ausgestaltung der Regel- und Absperrvorrichtung sieht vor, daß die im Gehäuse gelagerte Schwenkscheibe eine freie Durchtrittsöffnung mindestens entsprechend der Gehäusedurchgangsöffnung aufweist.

Weiterhin kann die Schwenkscheibe mittels eines zentrischen Drehzapfens im Gehäuse gelagert sein. Bei Bedarf kann diese Lagerung zusätzlich zu derjenigen vorgesehen sein, die den Umfang der Schwenkscheibe am Innenumfang des kreisförmigen Gehäusehohlraums führt. Der nicht durch Verstellkräfte beanspruchte zentrische Drehzapfen erfordert nur kleine Abmessungen und keine Dichtungen und braucht auch nicht wie bei bekannten Drehschiebern zur Antriebsübertragung nach außen geführt zu werden.

Zweckmäßigerweise ragt der Antriebszapfen durch einen seiner Bewegungsbahn angepaßten Bogenschlitz einer Gehäusewand nach außen. Zweckmäßigerweise ist an dem aus dem Bogenschlitz hervorstehenden Antriebszapfen ein Kurbelarm befestigt, an dem eine manuell oder durch Servomotor angetriebene Außenspindel oder eine Kolbenstange eines Druckmittelzylinders angreift. Auf diese Weise wird die lineare Antriebsbewegung in die Drehbewegung für die Schwenkscheibe umgewandelt.

In weiterer Ausgestaltung wird vorgeschlagen, daß das Gehäuse radial unterteilt ist und in einer ersten Gehäuseplatte eine geschliffene und/oder mit reibungsarmem Material beschichtete, kreisrunde Vertiefung zur Aufnahme der Schwenkschiebe aufweist und durch eine glattwandige, mit reibungsarmem Material beschichtete zweite Gehäuseplatte lösbar verschlossen ist. Indem die Schwenkscheibe die kreisförmige Vertiefung in der ersten Gehäuseplatte vollständig ausfüllt, bleibt auch bei nur teilweise geöffneter Schwenkscheibe ein totraumfreier Durchgang für das fließende Medium durch den Drehschieber gewährleistet. Das Zurückdrehen der Öffnung der Schwenkscheibe bis zur Ausfluchtung mit der Durchgangsöffnung des Gehäuses bewirkt ein zwangsläufiges Entleeren etwaiger Rückstände der Stoffströmung in die Rohrleitung.

Die kreisrunde Vertiefung in der ersten Gehäuseplatte kann zentral durch den axialen Drehzapfen und am Umfang durch einen äußeren Abstandshalter begrenzt sein, der zwischen den beiden Gehäuseplatten abgedichtet verschraubt ist und eine kreisförmige Innenumfangsfläche aufweist.

Die Regel- und Absperrvorrichtung nach der Erfindung ist dadurch weitergebildet, daß der anstelle oder zusätzlich zu der Umfangsführung der Schwenkscheibe vorgesehene zentrische Drehzapfen sich auf beiden Seiten der Schwenkscheibe erstreckt und in beiden Gehäuseplatte gelagert ist. Wenn bei einer Ausführungsform der zentrische Drehzapfen entfällt, wird die Schwenkscheibe ausschließlich am Innenumfang des kreisförmigen Aufnahmeraums im Gehäuse geführt. Bei dieser Variante kann die Durchtrittsöffnung bis an oder über das Gehäusezentrum vergrößert werden, ohne die Gesamtabmessungen des Gehäuses vergrößern zu müssen.

Gemäß einem weiteren Merkmal kann die Durchgangsöffnung im Gehäuse durch das lichte Innenmaß zweier von beiden Gehäuseseiten eingeführter Hülsen definiert sein, die mit Flanschen an der Außenseite der Gehäuseplatten befestigt sind. Weiterhin ist vorgesehen, daß die die Durchgangsöffnung der Gehäuseplatten bildenden und an diesen befestigten Hülsen zur auswechselbaren Halterung von Meß- und Regelblenden dienen. Auf diese Weise lassen sich für das jeweilige Strömungsmedium und unter Berücksichtigung der jeweiligen Strömungsgeschwindigkeit weitgehend konstante Kennlinien erreichen.

Um die Abdichtungssicherheit zu erhöhen, wird vorgeschlage, daß die Gehäuseplatten und/oder die Oberflächen der Schwenkscheibe jeweils eine die Durchgangsöffnung umgebende Nut mit einem Dichtring enthalten.

Ausführungsbeispiele des Absperr- und Regelschiebers gemäß der Erfindung sind nachfolgend anhand der Zeichnung beschrieben. Es zeigen jeweils schematisch:

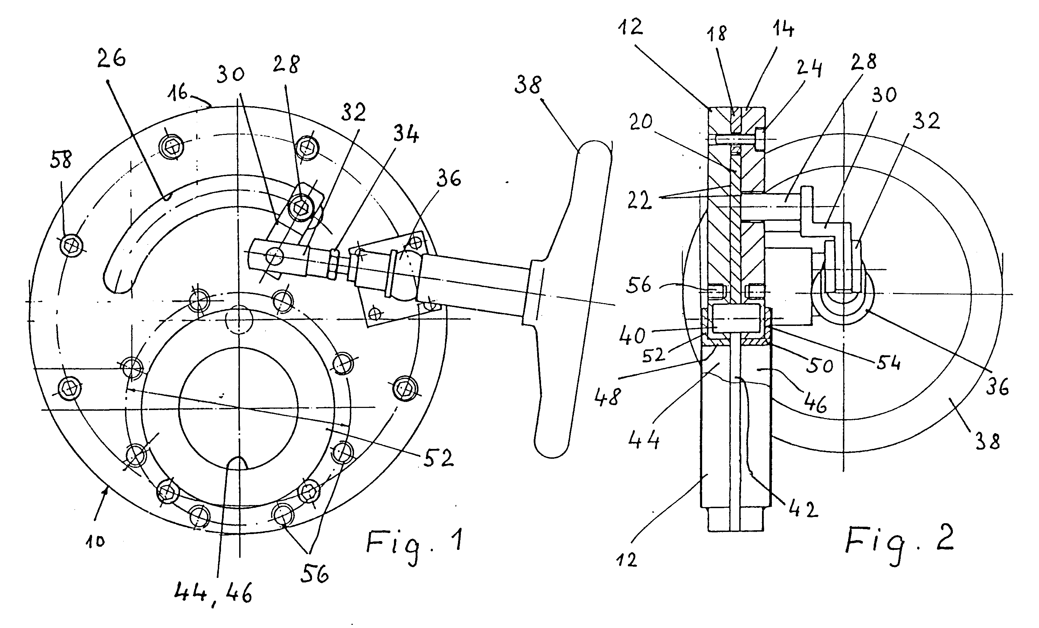

- Fig. 1: eine Ansicht des erfindungsgemäßen Absperr- und Regelschiebers
- Fig. 2: einen senkrechten Teilquerschnitt durch die Mittelachse des Schiebergehäuses nach Fig. 1,
- Fig. 3: eine ähnliche Darstellung wie in Fig. 1, jedoch mit einem Druckmittelzylinder zur Servoverstellung der Schwenkscheibe und
- Fig. 4: in ähnlicher Darstellung wie in Fig. 2 einen senkrechten Teilquerschnitt durch die Anordnung in Fig. 3.

Das Drehschiebergehäuse 10 besteht aus zwei gleich großen Platten 12,14, beispielsweise mit kreisförmigem Umfang 16. Die Gehäuseplatten sind unter axialem Abstand zueinander angeordnet, der durch einen äußeren Abstandshalter 18 mit kreisförmigem Innenumfang und beliebigem Außenumfang definiert ist. Anstelle dieses getrennten Abstandhalterringes 18 kann dieser bei einer Variante einen integralen Außenrandteil einer Gehäuseplatte 12 bilden, so daß in der somit geschaffenen axialen Vertiefung die Schwenkscheibe 20 Platz findet und den Hohlraum vollständig ausfüllt. Die Innenseiten der Gehäuseplatten und vorzugsweise auch beide Außenseiten der Schwenkscheibe 20 sind mit selbstdichtendem, insbesondere säurefestem Material 22 beschichtet. Diese Beschichtung erstreckt sich vorzugsweise auch entlang und durch die Öffnungen von Schwenkscheibe und Gehäuse. Die Regel- und Absperreinrichtung findet Anwendung für die strömenden Medien in den Zellstoff-, Papier-, Chemie-, Granulat-, Lebensmittel- und Flüssigchemikalien-Industrien.

Die beiden Gehäuseplatten 12, 14 des Drehschiebergehäuses 10 werden durch einen äußeren Kranz von Schrauben 58 zusammengehalten, die sich quer durch den unabhängigen oder integrierten Abstandsring 18 zwischen den Gehäuseplatten 12, 14 erstrecken.

Die Gehäuseplatte 14 enthält einen konzentrischen bogenförmigen Schlitz 26 von etwa 120 ° Bogenlänge mit Anzeigenskala für den Öffnungsgrad der Schwenkscheibe 20 zur Gehäuseöffnung 42. Durch den Schlitz 26 erstreckt sich ein auf der Schwenkscheibe 20 befestigter Antriebszapfen 28, dessen freies Ende über einen Kurbelarm 30 mit dem Gabelende 32 einer Spindel 34 in Verbindung steht. Die Spindel ist in einer vorzugsweise auf dem Gehäuse 10 abgestützten Führung 36 geführt, die verlängert ist bis zu einem auf der Spindel befestigten Handrad 38 oder wahlweise bis an einen Pneumatik- oder Elektromotor. Durch Drehung des Handrades oder über Pneumatikzylinder oder elektrischen Antrieb wird die Schwenkscheibe 20 um ihren zentrischen Drehzapfen 40 verschwenkt, und dabei kann die Öffnung 42 innerhalb der Schwenkscheibe 20 gegenüber der gleichgroßen feststehenden Öffnung 44, 46 in den Gehäuseplatten 12, 14 bis zum Verschließzustand verdreht werden. Die Schwenkscheibe 20 ist mittels des zentrischen Drehzapfens 40 in beiden Gehäuseplatten 12, 14 gelagert. Eine oder wahlweise beide Gehäuseplatten 12, 14 enthalten zentrische Zapfenlager zur Aufnahme der Enden des Drehzapfens 40. Der zentrische Drehzapfen kann bei einer Variante entfallen, bei der die Schwenkscheibe ausschließlich am Innenumfang des kreisförmigen Aufnahmeraumes im Schwenkschiebergehäuse geführt wird. Dadurch kann die Durchtrittsöffnung bis an oder über das Gehäusezentrum vergrößert werden, ohne die Gesamtabmessungen des Gehäuses vergrößern zu müssen.

Die Regel- und Absperrvorrichtung ist weiter so ausgelegt, daß bei pneumatischem Antriebsausfall der Hebel 39, der sich hinter dem pneumatischen Antrieb befindet, umgelegt wird und damit der Betrieb ohne Stillstand der Anlage mit Handbetätigung weiterlaufen kann.

Die Gehäuseöffnungen 44,46 in den Gehäuseplatten 12,14 sind durch einsetzbare Hülsen 48,50 an verschiedene Blendenformen anpaßbar und zur auswechselbaren Halterung von Meß- und Regelblenden gedacht. Rings um die einen Wulst auf dem Gehäuse 10 bildenden Hülseneinsätze und deren Flansche 52, 54 befinden sich auf beiden Gehäuseseiten kranzförmige Anordnungen von Schrauböffnungen 56, an denen jeweils ein Rohrflansch mit Schrauben befestigt wird. Auf diese Weise wird das unabhängige Schwenkschiebergehäuse wahlweise von rechts oder links schnell in eine bestehende Rohrleitung ein- oder ausgebaut. Gegebenenfalls können die Flansche oder Ringe 52,54 gesondert, also unabhängig von den Rohrflanschen, am Schiebergehäuse 10 befestigt werden.

Die Entlüftung des Innenraumes des Gehäuses von Gerüchen und Gasen wird durch Lockern der Gewindeverschraubungen 39 bei nicht mehr fließendem Medium vorgenommen. Somit ist gewährleistet, daß dann das wieder neu durchfließende Medium nicht durch Rückstände des vorherigen Mediums beeinträchtigt wird.

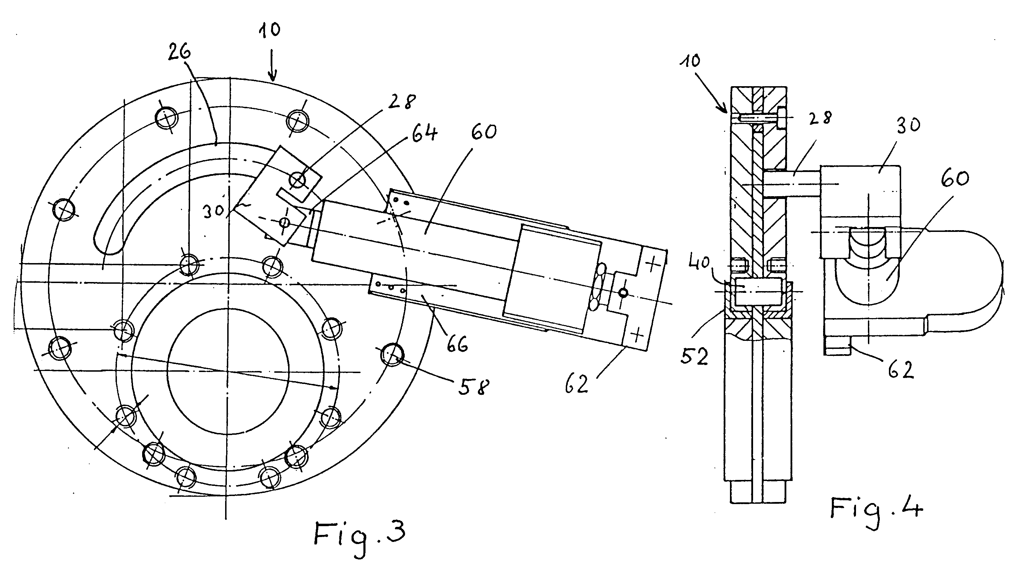

Beim Ausführungsbeispiel gemäß Figur 3 und 4 ist das gleiche Drehschiebergehäuse 10 wie vorhergehend beschrieben gezeigt, jedoch mit dem Unterschied, daß anstelle des Handrades zur Verstellung der Schwenkscheibe 20 nunmehr ein Druckmittelzylinder 60 mittels einer Trageinrichtung 66 am Drehschiebergehäuse 10 befestigt ist. Der Zylinder 60 ist auf einer Konsole 62 der Halterung 66 abgestützt und mit dem freien Ende seiner Kolbenstange 64 am Kurbelarm 30 angelenkt. Die gelenkige Verbindung des Kurbelarms 30 einerseits mit der Kolbenstange 64 und andererseits mit dem Antriebszapfen 28 der Schwenkscheibe 20 sorgen für die verspannungsfreie Umsetzung der aus dem Zylinder stammenden gradlinigen Antriebskraft in die Bogenbewegung der Schwenkscheibe 20. Die schematische Darstellung der Einzelteile des erfindungsgemäßen Schwenkschiebers und deren größenmäßige Beziehung zueinander sind nicht zwingend, sondern lassen vielfältige Abänderungen in Anpassung an die jeweiligen Anwendungsdaten zu.

## Patentansprüche

1. Regel- und Absperrvorrichtung für flüssige oder gasförmige Medien in Rohrleitungen, mit einer in einer zur Rohrachse im allgemeinen senkrechten Ebene beweglichen und wenigstens eine Durchtrittsöffnung (42) aufweisenden Schwenkscheibe (20), die in einem an die Rohrleitung anschließbaren und eine deren Nennweite entsprechende Durchgangsöffnung (44, 46) enthaltenden Gehäuse untergebracht ist, wobei eine Hälfte der Schwenkscheibe (20) innerhalb ihres kreisförmigen Außenumfanges wenigstens die eine Durchtrittsöffnung (42) aufweist und am Innenumfang eines kreisförmigen Hohlraumes des Gehäuses (10) sowie auf beiden Seiten zwischen radialen Gleitschichten (22) geführt ist, wobei die Schwenkscheibe (20) einen Antriebszapfen (28) aufweist, und mit einer Antriebseinrichtung (38; 60) zur Kraftübertragung mit dem Antriebszapfen (28) und zur Durchführung von Schwenkbewegungen um ihre Mittelachse in Verbindung steht,
**dadurch gekennzeichnet,**
daß der Antriebszapfen (28) zur Kraftübertragung für die Schwenkbewegung in der anderen Hälfte der Schwenkscheibe (20) innerhalb ihres Außenumfanges vorgesehen ist,
und daß die am Antriebszapfen (28) angreifende Antriebseinrichtung (38; 60) am Gehäuse (10) abgestützt ist.

2. Regel- und Absperrvorrichtung nach Anspruch 1, dadurch gekennzeichnet, daß die im Gehäuse (11) gelagerte Schwenkscheibe (20) eine freie Durchtrittsöffnung (42) mindestens entsprechend der Gehäusedurchgangsöffnung (44, 46) aufweist.

3. Regel- und Absperrvorrichtung nach Anspruch 1 oder 2, dadurch gekennzeichnet, daß die Schwenkscheibe (20) mittels eines zentrischen Drehzapfens (40) im Gehäuse gelagert ist.

4. Regel- und Absperrvorrichtung nach einem der vorhergehenden Ansprüche, dadurch gekennzeichnet, daß der Antriebszapfen (28) durch einen seiner Bewegungsbahn angepaßten Bogenschlitz (26) einer Gehäusewand nach außen ragt.

5. Regel- und Absperrvorrichtung nach Anspruch 4, dadurch gekennzeichnet, daß an dem aus dem Bogenschlitz (26) hervorstehenden Antriebszapfen (28) ein Kurbelarm (30) befestigt ist, an dem eine manuell oder durch Servomotor angetriebene Außenspindel (34) oder eine Kolbenstange (64) eines Druckmittelzylinders (60) angreift.

6. Regel- und Absperrvorrichtung nach einem der vorhergehenden Ansprüche, dadurch gekennzeichnet, daß das Gehäuse (10) radial unterteilt ist und in einer ersten Gehäuseplatte (12) eine geschliffene und/oder mit reibungsarmem Material beschichtete, kreisrunde Vertiefung zur Aufnahme der Schwenkscheibe (20) aufweist und durch eine glattwandige, mit reibungsarmem Material beschichtete zweite Gehäuseplatte (14) lösbar verschlossen ist.

7. Regel- und Absperrvorrichtung nach Anspruch 6, dadurch gekennzeichnet, daß die kreisrunde Vertiefung in der ersten Gehäuseplatte (12) zentral durch den axialen Drehzapfen (40) und am Umfang durch einen äußeren Abstandshalter (18) begrenzt ist, der zwischen den beiden Gehäuseplatten (12, 14) abgedichtet verschraubt ist und eine kreisförmige Innenumfangsfläche aufweist.

8. Regel-und Absperrvorrichtung nach Anspruch 6 oder 7, dadurch gekennzeichnet, daß die Schwenkscheibe (20) die kreisrunde Vertiefung in der ersten Gehäuseplatte (12) vollständig ausfüllt.

9. Regel- und Absperrvorrichtung nach Anspruch 3, dadurch gekennzeichnet, daß der anstelle oder zusätzlich zu der Umfangsführung der Schwenkscheibe (20) vorgesehene zentrische Drehzapfen (40) sich auf beiden Seiten der Schwenkscheibe (20) erstreckt und in beiden Gehäuseplatten (12, 14) gelagert ist.

10. Regel- und Absperrvorrichtung nach einem der vorhergehenden Ansprüche, dadurch gekennzeichnet, daß die Durchgangsöffnung (44, 46) im Gehäuse (10) durch das lichte Innenmaß zweier von beiden Gehäuseseiten eingeführter Hülsen (48, 50) definiert ist, die mit Flanschen (52, 54) an der Außenseite der Gehäuseplatten (12, 14) befestigt sind.

11. Regel- und Absperrvorrichtung nach Anspruch 10, dadurch gekennzeichnet, daß die die Durchgangsöffnung (44, 46) der Gehäuseplatten (12, 14) bildenden und an diesen befestigten Hülsen (48, 50) zur auswechselbaren Halterung von Meß- und Regelblenden dienen.

12. Regel- und Absperrvorrichtung nach einem der Ansprüche 6 bis 11, dadurch gekennzeichnet, daß die Gehäuseplatten (12, 14) und/oder die Oberflächen der Schwenkscheibe (20) jeweils eine die Durchgangsöffnung umgebende Nut mit einem Dichtring enthalten.

## Claims

1. Control and shutoff device for liquid or gaseous fluids in pipes, comprising a swivel disc (20) moveable in a plane generally vertical to the pipe axis, having at least one passing opening (42) and being accommodated in a housing adapted to be connected to the pipe and including a passage opening (44, 46) corresponding to the nominal width of the pipe, one half of the swivel disc (20) including within its circular outer circumference at least said one opening (42) and being guided both at the inner circumference of a circular hollow space of the housing (10) and at both sides between radial slide layers (22), the swivel disc (20) having a drive pin (28) and being connected thereby to a drive means for force transmission (38, 60) and for carrying out swivel motions about its center axis,
**characterized** in
that the drive pin (28) for force transmission in view of the swivel motion is provided in the other half of the swivel disc (20) within the outher circumference thereof,
and in that the drive means (38, 60) acting on the drive pin (28) is supported at the housing (10).

2. Control and shutoff device according to claim 1, characterized in that the swivel disc (20) rotatably mounted in the housing (11) has an unrestricted passing opening (42) at least corresponding to the passage opening (44, 46) of the housing.

3. Control and shutoff device according to claim 1 or 2, characterized in that the swivel disc (20) is mounted in the housing (10) by means of a central pivot (40).

4. Control and shutoff device according to one of the preceding claims, characterized in that the drive pin (28) projects through an arched slit (26) of one housing wall, said slit being adjusted to the moving path of the drive pin.

5. Control and shutoff device according to claim 4, characterized in that a crank arm (30) is fastened to the drive pin (28) projecting from the arched slit (26), a manually or servo-driven external spindle (34) or a piston rod (64) of an pressure fluid cylinder (60) acting on said crank arm (30).

6. Control and shutoff device according to one of the preceding claims, characterized in that the housing (10) is divided radially, and in a first housing plate (12) has a circular depression finished and/or coated with low friction material to receive the swivel disc (20), and is detachably closed by a plane- walled second housing plate (14) coated with low friction material.

7. Control and shutoff device according to claim 6, characterized in that the circular depression in the first housing plate (12) is limited at the center by the axial pivot (40) and at the circumference by an outer spacer ring (18), which is sealingly bolted inbetween the two housing plates (12, 14) and has a circular inner circumferential surface.

8. Control and shutoff device according to claim 6 or 7, characterized in that the swivel disc (20) entirely fills up the circular depression in the first housing plate (12).

9. Control and shutoff device according to claim 3, characterized in that the central pivot (40), which is provided instead of or additionally to the circumferential guide of the swivel disc (20), extends to both sides of the swivel disc (20) and is rotatably mounted to both housing plates (12, 14).

10. Control and shutoff device according to one of the preceding claims, characterized in that the passage opening (44, 46) in the housing (10) is defined by the inside dimension of two casings (48, 50) introduced from opposite sides of the housing (10), which are fixed by means of flanges (52, 54) to the outer side of the housing plates (12, 14).

11. Control and shutoff device according to claim 10, characterized in that the casings (48, 50) forming the passage opening (44, 46) of the housing plates (12, 14) and being fixed to them, serve for interchangeably mounting of restrictors and regulating shutters.

12. Control and shutoff device according to one of the claims 6 to 11, characterized in that the housing plates (12, 14) and/or the surfaces of the swivel disc (20) each contain a groove with a sealing ring surrounding the passage opening (44, 46).

## Revendications

1. Dispositif de régulation et d'arrêt pour des fluides liquides ou gazeux dans des tuyauteries, comprenant un disque pivotant (20) mobile dans un plan sensiblement perpendiculaire à l'axe du tuyau et présentant au moins une ouverture de passage (42), qui est logé dans un corps pouvant être raccordé à la tuyauterie et contenant une ouverture de passage (44, 46) correspondant à sa largeur nominale, une moitié du disque pivotant (20) présentant à l'intérieur de sa périphérie extérieure circulaire au moins une ouverture de passage (42) et étant guidée sur la périphérie intérieure d'un espace creux circulaire du corps (10) ainsi que des deux côtés entre des couches de glissement (22) radiales, le disque pivotant (20) présentant une cheville d'entraînement (28), et comprenant également un dispositif d'entraînement (38, 60) pour la transmission de la force avec la cheville d'entraînement (28) et pour la réalisation de mouvements de pivotement autour de son axe médian, caractérisé en ce que la cheville d'entraînement (28) est prévue en vue de la transmission de la force pour le mouvement de pivotement dans l'autre moitié du disque pivotant (20) à l'intérieur de sa périphérie extérieure, et en ce que le dispositif d'entraînement (38, 60) en prise sur la cheville d'entraînement (28) est appuyé sur le corps (10).

2. Dispositif de régulation et d'arrêt selon la revendication 1, caractérisé en ce que le disque pivotant (20) supporté dans le corps (11) présente une ouverture de passage (42) correspondant au moins à l'ouverture de passage (44, 46) du corps.

3. Dispositif de régulation et d'arrêt selon la revendication 1 ou 2, caractérisé en ce que le disque pivotant (20) est supporté dans le corps au moyen d'un pivot central (40).

4. Dispositif de régulation et d'arrêt selon l'une ou l'ensemble des revendications précédentes, caractérisé en ce que la cheville d'entraînement (28) dépasse vers l'extérieur à travers une fente en arc (26) d'une paroi de corps adaptée à sa trajectoire.

5. Dispositif de régulation et d'arrêt selon la revendication 4, caractérisé en ce qu'un bras de manivelle (30) est fixé à la cheville d'entraînement (28) dépassant de la fente en arc (26), sur lequel une tige extérieure (34) entraînée manuellement ou par un servomoteur ou une tige de piston (64) d'un vérin (60) se met en prise.

6. Dispositif de régulation et d'arrêt selon l'une ou l'ensemble des revendications précédentes, caractérisé en ce que le corps (10) est divisé dans le sens radial et présente dans une première plaque de corps (12) une dépression circulaire meulée et/ou revêtue de matériau à faible friction destinée à recevoir le disque pivotant (20) et est fermé de manière amovible par une seconde plaque de corps (14) à paroi lisse, revêtue de matériau à faible friction.

7. Dispositif de régulation et d'arrêt selon la revendication 6, caractérisé en ce que la dépression circulaire dans la première plaque de corps (12) est délimitée au centre par le pivot (40) axial et sur la périphérie par une pièce d'écartement (18) extérieure, qui est vissée de manière étanche entre les deux plaques de corps (12, 14) et présente une surface de périphérie intérieure circulaire.

8. Dispositif de régulation et d'arrêt selon la revendication 6 ou 7, caractérisé en ce que le disque pivotant (20) remplit entièrement la dépression circulaire dans la première plaque de corps (12).

9. Dispositif de régulation et d'arrêt selon la revendication 3, caractérisé en ce que le pivot central (40) prévu au lieu du guidage périphérique du disque pivotant (20) ou en complément de celui-ci s'étend des deux côtés du disque pivotant (20) et est supporté dans les deux plaques de corps (12, 14).

10. Dispositif de régulation et d'arrêt selon l'une ou l'ensemble des revendications précédentes, caractérisé en ce que l'ouverture de passage (44, 46) dans le corps (10) est définie par la dimension intérieure libre de deux douilles (48, 50) introduites des deux côtés du corps, qui sont fixées par des brides (52, 54) sur la face extérieure des plaques de corps (12, 14).

11. Dispositif de régulation et d'arrêt selon la revendication 10, caractérisé en ce que les douilles (48, 50) formant l'ouverture de passage (44, 46) des plaques de corps (12, 14) et fixées à celles-ci servent à la fixation interchangeable de diaphragmes de mesure et de régulation.

12. Dispositif de régulation et d'arrêt selon l'une ou l'ensemble des revendications 6 à 11, caractérisé en ce que les plaques de corps (12, 14) et/ou les surfaces du disque pivotant (20) contiennent chacun une gorge entourant l'ouverture de passage avec un joint d'étanchéité.
